# EUROPÄISCHE PATENTSCHRIFT

(11) **EP 1 167 676 B1**
(45) Veröffentlichungstag und Bekanntmachung des Hinweises auf die Patenterteilung: **24.05.2006**
(21) Anmeldenummer: 01114577.8
(22) Anmeldetag: 20.06.2001
(51) Int. Cl.: E05G 1/024

(54) **Sicherungsschrank**
Safe
Coffre-fort

(30) Priorität: 21.06.2000 DE 20010647 U
(43) Veröffentlichungstag der Anmeldung: 02.01.2002
(73) Patentinhaber: BURG-WÄCHTER KG, 58540 Meinerzhagen -Valbert (DE)
(72) Erfinder: Lüling, Harald, 58540 Meinerzhagen (DE)
(74) Vertreter: Wanischeck-Bergmann, Axel

(56) Entgegenhaltungen:
- DE-A- 3 636 644
- DE-A- 19 704 629
- DE-A- 19 802 144
- US-A- 4 048 926

## Beschreibung

Die Erfindung betrifft einen Sicherungsschrank, insbesondere einen Safe oder einen Tresor, mit einem Gehäuse, das zumindest teilweise aus einem aushärtbarem Füllmittel besteht.

Sicherungsschränke, insbesondere Daten- und/oder Dokumentensicherungsschränke, die auch als Safes, Tresore oder Panzerschränke bezeichnet werden, sind in vielfältiger Ausgestaltung aus dem Stand der Technik bekannt. In der Regel bestehen diese vorbekannten Sicherungsschränke aus einem Gehäuse mit einer Zugangsöffnung, die über eine einflügelige oder gelegentlich auch zweiflügelige Tür verschließbar ist. Das Gehäuse derartiger Sicherungsschränke ist vorzugsweise quaderförmig ausgebildet. Derartige Sicherungsschränke dienen der Aufbewahrung von vor Zugriff Dritter zu schützender Dokumente, Datenträger und/oder Wertgegenstände.

Üblicherweise bestehen derartige Sicherungsschränke aus speziellen Metalllegierungen, wobei sowohl die Wandungen, als auch die Tür bzw. Türen in der Regel zumindest doppelwandig ausgebildet und die Zwischenräume beispielsweise mit Beton ausgegossen sein können. Es ist aber auch denkbar, beispielsweise die Außenwand als Schalung zu versehen und dann den so entstanden Zwischenraum auszufüllen. Der Sicherungsschrank wäre somit nicht zwingend doppelwandig. Demzufolge weisen jedoch derartige Sicherungsschränke ein hohes Gewicht auf, um einen unbefugten einfachen Abtransport der Sicherungsschränke zu erschweren. Es sind zum einen derartige Sicherungsschränke bekannt, die frei stehend angeordnet werden. Zum anderen können solchen Sicherungsschränke für die Integration in ein Mauerwerk vorgesehen sein. Weiterhin müssen die Sicherungsschränke im Brandfall erhöhte Temperaturen standhalten ohne dass die darin aufbewahrten Dokumente Schaden nehmen. Bei einer Füllung der Zwischenräume mit einer Standard-Betonmischung können im Innenraum die zulässigen Temperaturen überschritten werden. Der Beton wird brüchig und zerbröselt leichter bei Gewaltanwendung. Neben einem Brandfall ist auch der Angriff mit einem Schneidbrenner schädlich für das Füllmittel und führt ebenfalls zu einer verminderten Sicherheit des Sicherheitsschrankes

Aus der EP 0 348 556 B1 ist beispielsweise eine Panzermasse für einen Sicherungsschrank bekannt, die aus einem Beton besteht, der mit Kunststoff und/oder Naturkautschuk als Bindemittel und mit einem körnigen Hartstoff in Form von Aluminiumoxid oder Zirkoniumoxid sowie mit einem Flammenhemmer ausgebildet ist, wobei der Beton Zuschlagstoffe und Metall- oder Glasfasern aufweist. Eine derartige Panzermasse hat sich als Füllmittel für Sicherungsschränke bewährt.

Ferner ist aus der DE 197 04 629 A1 eine Füllung oder ein Auskleidungselement für einen Wertschutzschrank, Tresor oder Panzergeldschrank bekannt, welche bzw. welches ein hydraulisches Bindemittel und mindestens einen Zuschlag in Form eines wasseraufnehmenden und wasserspeichernden Stoffes aufweist. Beispielsweise ist hierfür ein geblähtes AI-Fe-Mg-Silikat geeignet.

Schließlich ist aus der DE 36 36 644 A1 die Verwendung einer Betonmischung als Füllstoff für Tresorwände bekannt. Diese Betonmischung besteht aus Silikatpulver in einem Anteil von 10 bis 20% des Zementgewichts und einem Benetzungsmittel auf Naphthalain-Sulfonatbasis in einem Anteil von 6 bis 10% des Zementgewichts und im übrigen aus Zement, Zuschlagstoffen und Wasser.

Ausgehend von diesem Stand der Technik ist es Aufgabe der Erfindung, einen gattungsgemäßen Sicherungsschrank derart weiterzubilden, dass die Füllung eine gleichbleibende Isolation bei hoher mechanischer Festigkeit aufweist.

Die **Lösung** dieser Aufgabenstellung sieht vor, dass das aushärtbare Füllmittel (3) aus 20 bis 35 Gew.-% Wasser, aus 40 bis 55 Gew.-% Zement und 15 bis 30 Gew.-% Granulat aus Porenbeton besteht.

Vorzugsweise ist ein Zusammensetzungsverhältnis von 26 bis 31 Gew.-% Wasser, 43 bis 52 Gew.-% Zement und 21 bis 26 Gew.-% Granulat aus Porenbeton vorgesehen, aus der sich eine gleichmäßige Stabilität und ein homogenes Gemisch erzielen lässt.

Nach einem weiteren bevorzugten Merkmal ist vorgesehen, dass das aushärtbare Füllmittel (3) bis zu 25 Gew.-% Zuschlagstoffe aufweist. Als Zuschlagstoffe sind beispielsweise Betonsand, Betonkies, Bruchsteine, Quarzsand, Quarzmehl, Calciumsilikate, wie beispielsweise Wollastonit, und/oder Hartstoffe, wie Aluminiumoxide, Oxidkeramik und/oder Korund vorgesehen. Die Zuschlagstoffe haben vorzugsweise eine Korngröße bis 9mm, insbesondere bis 5 mm. Durch die Beigabe der Zuschlagstoffe werden die mechanischen Eigenschaften beeinflußt, es kann derart beispielsweise die Festigkeit sowie die Biege-, die Zug- und die Schlagzähigkeit des Füllmittels verbessert, insbesondere erhöht werden.

Vorteilhafterweise wird dem aushärtbarem Füllmittel noch 0,05 bis 0,5 Gew.-% eines Öls, insbesondere eines Mischöls beigefügt, um die Fließfähigkeit des Füllmittels zu verbessern.

Besonders vorteilhaft ist es, wenn als Zement Kalksteinzement zum Einsatz gelangt, der im hier vorliegenden Einsatzgebiet besonders vorteilhafte Verarbeitungseigenschaften aufweist.

Es ist ferner nach einer Weiterbildung der Erfindung vorgesehen dieses aushärtbare Füllmittel sowohl in dem gesamten Gehäuse, also im Boden, in der Decke und in den Seitenwänden, sowie in der Tür anzuordnen.

Um die Qualität der Füllung der Zwischenräume zu beurteilen, ist in der Gehäusewand des Sicherungstchrankes mindestens eine Kontrollöffnung vorgesehen. Hierzu eignet sich besonders das Einsetzen einer Hülse in dem Bereich, in den der Riegel beim Schließen eingreift. Die ordnungsgemäße lunkerfreie Füllung des Zwischenraumes kann so überprüft werden. Der Einsatz derartiger Kontrollöffnungen kann ebenfalls an schwierig zu befüllenden Stellen, wie beispielsweise an Wandübergängen oder Hinterschnitten, vorgesehen werden.

Eine derartig gefertigte Wand kann modulartig in mehreren Schichten hintereinander eingesetzt werden und somit die Sicherheit eines Sicherungsschrankes zusätzlich erhöhen.

Um den Sicherungsschrank am Boden zu befestigen, kann ein Befestigungsstutzen vorgesehen sein, der vorzugsweise im Boden angebracht ist.

Die vorgeschlagene Zusammensetzung für das aushärtbare Füllmittel eignet sich bestens für die Serienfertigung, da die Mischung eine hohe Prozeßstabilität aufweist und somit auch in größeren Mengen im voraus gemischt werden kann.

Weitere Merkmale und Vorteile der Erfindung ergeben sich aus der nachfolgenden Beschreibung der in der Zeichnung dargestellten Ausführungsformen der Erfindung. In der Zeichnung zeigen:
- Fig. 1: den Aufbau eines Abschnitts eines doppelwandigen Gehäuses für einen Sicherungsschrank im Längsschnitt, und
- Fig. 2: den Aufbau einer modulartig aufgebauten Gehäusewandung eines Sicherungsschrankes im Längsschnitt.

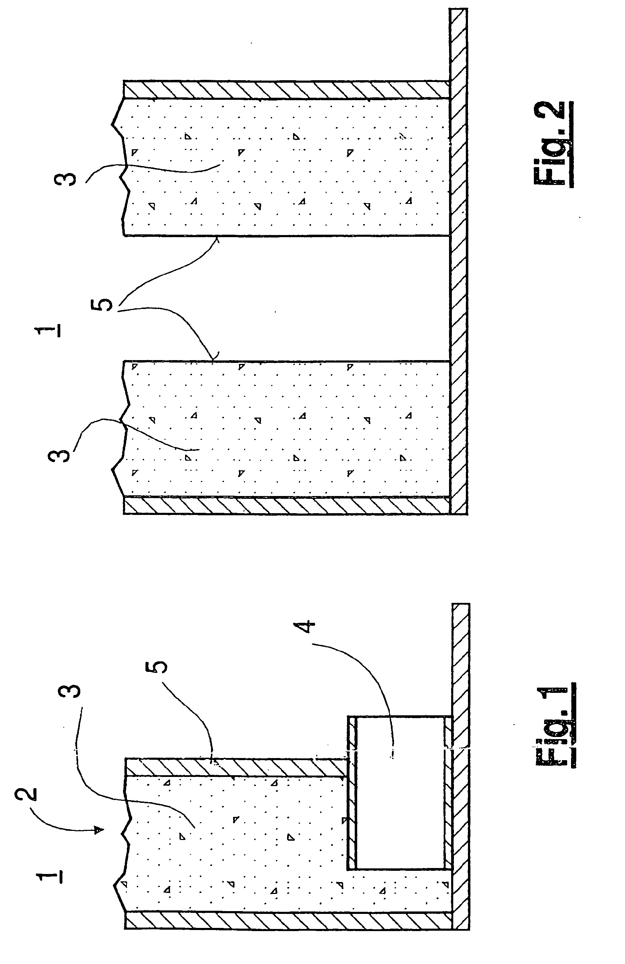

In Figur 1 ist ein Teilbereich eines doppelwandig ausgebildeten Gehäuses eines Sicherungsschrankes 1 dargestellt. Das Gehäuse besteht aus einer Innenwand 5 und einer im Abstand dazu angeordneten Aus-senwand, wobei die Außenwand und die Innenwand 5 parallel zueinander ausgerichtet sind und einen Zwischenraum 2 ausbilden 2.

In den Zwischenraum 2 ist ein aushärtbare Füllmittel 3 eingefüllt. Im unteren Bereich der Innenwand 5 ist in eine Öffnung als Kontrollöffnung 4 eingesetzt, die als Hülse ausgebildet ist und in die ein nicht näher dargestellter Riegel beim Schließen einer Tür eingreift. Die Kontrollöffnung dient der Überprüfung einer vollständigen Füllung des Zwischenraumes 2.

Figur 2 zeigt eine Gehäusewand die aus zwei einzelnen Wänden aufgebaut ist, wobei hier die jeweilige Innenwand 5 über eine Schalung, nicht mehr dargestellt, entstanden ist. Die zwischen den entfernten Innenwänden 5 und den noch verbleibenden Wänden ausgebildeten Zwischenräume 2 sind mit einem aushärtbaren Füllmittel 3 ausgefüllt.

Das Füllmittel 3 besteht in beiden Ausführungsformen des Figuren 1 und 2 aus 26 bis 31 Gew.-% Wasser, aus 43 bis 52 Gew.-% Zement und aus 21 bis 26 Gew.-% eines Granulats aus Porenbeton.

Das aushärtbare Füllmittel weist 15 Gew.-% Zuschlagstoffe auf, wobei als Zuschlagstoffe Betonsand, Betonkies, Bruchsteine, Quarzsand, Quarzmehl, Calciumsilikate, wie beispielsweise Wollastonit, und/oder Hartstoffe, wie Aluminiumoxide, Oxidkeramik und/oder Korund vorgesehen sind. Die Korngröße der Zuschlagstoffe beträgt bis 5 mm aufweisen.

Der Zement des Füllmittels ist als Kalksteinzement ausgebildet.

Ferner weist das aushärtbare Füllmittel 0,5 Gew.-% eines Öls auf, welches die Fließfähigkeit des Füllmittels erhöht und das Einbringung des Füllmittels in die Wandungen des Sicherungsschrankes insbesondere dann erleichtert, wenn die Wandung zweischalig ausgebildet ist. Selbstverständlich kann die Wandung des Sicherungsschrankes auch mehr als zwei Schalen aufweisen, wenn die Sicherheitsanforderungen ein höheres Gewicht oder eine größere Wandstärke erfordern.

## Patentansprüche

1. Sicherungsschrank (1), insbesondere Safe oder Tresor, mit einem Gehäuse, das zumindest teilweise aus einem aushärtbarem Füllmittel (3) besteht,
**dadurch gekennzeichnet,**
**dass** das aushärtbare Füllmittel (3) aus 20 bis 35 Gew.-% Wasser, aus 40 bis 55 Gew.-% Zement und 15 bis 30 Gew.-% Granulat aus Porenbeton besteht.

2. Sicherungsschrank (1) nach Anspruch 1,
**dadurch gekennzeichnet,**
**dass** das aushärtbare Füllmittel (3) aus 26 bis 31 Gew.-% Wasser, aus 43 bis 52 Gew.-% Zement und 21 bis 26 Gew.-% Granulat aus Porenbeton besteht.

3. Sicherungsschrank (1) nach Anspruch 1 oder 2,
**dadurch gekennzeichnet,**
**dass** das aushärtbare Füllmittel (3) bis zu 25 Gew.-% Zuschlagstoffe aufweist.

4. Sicherungsschrank (1) nach Anspruch 3,
**dadurch gekennzeichnet,**
**dass** als Zuschlagstoffe Betonsand, Betonkies, Bruchsteine, Quarzsand, Quarzmehl, Calciumsilikate, wie beispielsweise Wollastonit, und/oder Hartstoffe, wie Aluminiumoxide, Oxidkeramik und/oder Korund vorgesehen sind.

5. Sicherungsschrank (1) nach Anspruch 3,
**dadurch gekennzeichnet,**
**dass** die Zuschlagstoffe eine Korngröße bis 9 mm, vorzugsweise bis 5 mm aufweisen.

6. Sicherungsschrank (1) nach einem der Ansprüche 1 bis 5,
**dadurch gekennzeichnet,**
**dass** der Zement als Kalksteinzement ausgebildet ist.

7. Sicherungsschrank (1) nach einem der Ansprüche 1 bis 6,
**dadurch gekennzeichnet,**
**dass** das aushärtbare Füllmittel (3) 0,05 Gew.-% bis 0,5 Gew.-% eines Öls aufweist.

8. Sicherungsschrank (1) nach einem der Ansprüche 1 bis 7,
**dadurch gekennzeichnet,**
**dass** das Gehäuse eine Wand (5) mit mindestens einer, vorzugsweise als Hülse ausgebildeten Kontrollöffnung (4) aufweist.

9. Sicherungsschrank (1) nach Anspruch 8,
**dadurch gekennzeichnet,**
**dass** die Kontrollöffnung (4) im Bereich eines Riegels angeordnet ist.

10. Sicherungsschrank (1) nach Anspruch 8,
**dadurch gekennzeichnet,**
**dass** die Kontrollöffnung (4) in Bereichen schwieriger Befüllung angeordnet ist.

11. Sicherungsschrank (1) nach einem der Ansprüche 1 bis 10,
**dadurch gekennzeichnet,**
**dass** das Gehäuse mehrere, zumindest zwei Wände (5) aufweist, wobei jede Wand (5) zumindest teilweise aus einem Füllmittel (3) nach mindestens einem der Ansprüche 1 bis 7 aufgebaut ist.

12. Sicherungsschrank (1) nach einem der Ansprüche 1 bis 10,
**dadurch gekennzeichnet,**
**dass** das Gehäuse mehrere, zumindest zwei Wände (5) aufweist, wobei die Wände (5) unter Ausbildung eines Zwischenraums (2) beabstandet zueinander angeordnet sind und der Zwischenraum (2) zumindest teilweise mit einem Füllmittel (3) nach mindestens einem der Ansprüche 1 bis 7 ausgefüllt ist.

13. Sicherungsschrank (1) nach einem der Ansprüche 1 bis 12,
**dadurch gekennzeichnet,**
**dass** Boden, Decke, Seitenwände und/oder Tür des Gehäuses zumindest teilweise aus einem Füllmittel (3) nach mindestens einem der Ansprüche 1 bis 7 aufgebaut oder mit einem Füllmittel (3) nach mindestens einem der Ansprüche 1 bis 7 ausgefüllt sind.

## Claims

1. Safekeeping cabinet (1), particularly safe or strong box, comprising a housing which at least partly consists of a hardenable filler (3),
**characterized in**
**that** the hardenable filler (3) consists of 20 to 35% by weight of water, 40 to 55% by weight of cement and 15 to 30% by weight of foam mortar granulates.

2. Safekeeping cabinet (1) according to claim 1,
**characterized in**
**that** the hardenable filler (3) consists of 26 to 31% by weight of water, 43 to 52% by weight of cement and 21 to 26% by weight of foam mortar granulates.

3. Safekeeping cabinet (1) according to claim 1 or 2,
**characterized in**
**that** the hardenable filler (3) includes up to 25% by weight of additives.

4. Safekeeping cabinet (1) according to claim 3,
**characterized in**
**that** as additives sand for concrete, gravel for concrete, unshaped stones, silica sand, quartz powder, calcium silicates like wollastonite, and/or mechanically resistant materials like aluminium oxides, oxide ceramics and or corundum are provided:

5. Safekeeping cabinet (1) according to claim 3,
**characterized in**
**that** the additives have a grain size of up to 9 mm, preferably up to 5 mm.

6. Safekeeping cabinet (1) according to one of the claims 1 to 5,
**characterized in**
**that** the cement is formed as limestone cement.

7. Safekeeping cabinet (1) according to one of the claims 1 to 6,
**characterized in**
**that** the hardenable filler (3) includes 0.05% by weight to 0.5% by weight of an oil.

8. Safekeeping cabinet (1) according to one of the claims 1 to 7,
**characterized in**
**that** the housing includes a wall (5) with at least one inspection hole (4) which is preferably formed as a sleeve.

9. Safekeeping cabinet (1) according to claim 8,
**characterized in**
**that** the inspection hole (4) is arranged in the region of a locking bar.

10. Safekeeping cabinet (1) according to claim 8,
**characterized in**
the inspection hole (4) is arranged in regions of difficult filling.

11. Safekeeping cabinet (1) according to one of the claims 1 to 10,
**characterized in**
**that** the housing includes several and at least two walls (5), each wall (5) being constructed at least partly from a filler (3) according to at least one of the claims 1 to 7.

12. Safekeeping cabinet (1) according to one of the claims 1 to 10,
**characterized in**
**that** the housing includes several and at least two walls (5), said walls (5) being mutually spaced under the formation of an intermediate space (2), and said intermediate space (2) being at least partly filled with a filler (3) according to at least one of the claims 1 to 7.

13. Safekeeping cabinet (1) according to one of the claims 1 to 12,
**characterized in**
**that** the bottom, top, lateral walls and/or door of the housing are at least partly constructed from a filler (3) according to at least one of the claims 1 to 7 or are filled with a filler (3) according to at least one of the claims 1 to 7.

## Revendications

1. Armoire de sécurité (1), en particulier coffre-fort, avec un bâti qui est constitué au moins partiellement par une matière de remplissage (3) qui peut durcir,
**caractérisé en ce**
**que** la matière de remplissage qui peut durcir (3) est constituée par 20 à 35 % en poids d'eau, 40 à 55 % en poids de ciment et 15 à 30 % en poids de granulés de béton cellulaire.

2. Coffre-fort (1) selon la revendication 1,
**caractérisé en ce**
**que** la matière de remplissage qui peut durcir (3) est constituée par 26 à 31 % en poids d'eau, 43 à 52 % en poids de ciment et 21 à 26 % en poids de granulés de béton cellulaire.

3. Coffre-fort (1) selon la revendication 1 ou 2,
**caractérisé en ce**
**que** la matière de remplissage qui peut durcir (3) présente jusqu'à 25 % en poids d'agrégats.

4. Coffre-fort (1) selon la revendication 3,
**caractérisé en ce**
**que** comme agrégats il est prévu du sable à béton, du gravier à béton, de la pierraille, du sable silicieux, de la poudre de quartz, des silicates de calcium comme, par exemple, de la wollastonite et/ou des substances dures comme des oxydes d'aluminium, de la céramique oxydée et/ou du corindon.

5. Coffre-fort (1) selon la revendication 3,
**caractérisé en ce**
**que** les agrégats ont une grosseur de grain allant jusqu'à 9 mm, de préférence jusqu'à 5 mm.

6. Coffre-fort (1) selon l'une des revendications 1 à 5,
**caractérisé en ce**
**que** le ciment est configuré comme du ciment de calcaire.

7. Coffre-fort (1) selon l'une des revendictions 1 à 6,
**caractérisé en ce**
**que** la matière de remplissage qui peut durcir (3) présente de 0,05 % en poids à 0,5 % en poids d'une huile.

8. Coffre-fort (1) selon l'une des revendications 1 à 7,
**caractérisé en ce**
**que** le bâti présente une paroi (5) avec au moins une ouverture de contrôle (4) configurée de préférence comme un manchon.

9. Coffre-fort (1) selon la revendiction 8,
**caractérisé en ce**
**que** l'ouverture de contrôle (4) est placée dans la zone d'un verrou.

10. Coffre-fort (1) selon la revendication 8,
**caractérisé en ce**
**que** l'ouverture de contrôle (4) est placée dans des zones de remplissage difficile.

11. Coffre-fort (1) selon l'une des revendications 1 à 10,
**caractérisé en ce**
**que** le bâti présente plusieurs parois (5), au moins deux, chaque paroi (5) étant constituée au moins partiellement par une matière de remplissage (3) selon au moins l'une des revendications 1 à 7.

12. Coffre-fort (1) selon l'une des revendictions 1 à 10,
**caractérisé en ce**
**que** le bâti présente plusieurs parois (5), au moins deux, les parois (5) étant placées espacées l'une de l'autre en formant un espace intermédiaire (2) et l'espace intermédiaire (2) étant rempli au moins partiellement avec une matière de remplissage (3) selon au moins l'une des revendications 1 à 7.

13. Coffre-fort (1) selon l'une des revendications 1 à 12,
**caractérisé en ce**
**que** le fond, le plafond, les parois latérales et/ou la porte du bâti sont constituées au moins partiellement avec une matière de remplissage (3) selon au moins l'une des revendications 1 à 7 ou sont remplies avec une matière de remplissage (3) selon au moins l'une des revendications 1 à 7.
